Europäisches Patentamt

European Patent Office

Office européen des brevets

(19)

(11) Numéro de publication: 0 317 679
A1

(12) # DEMANDE DE BREVET EUROPEEN

(21) Numéro de dépôt: 87402665.1

(22) Date de dépôt: 25.11.87

(51) Int. Cl.4: B61D 17/22 , B62D 47/02 , B60D 5/00

(43) Date de publication de la demande:
31.05.89 Bulletin 89/22

(84) Etats contractants désignés:
CH DE ES GB IT LI

(71) Demandeur: A.N.F. INDUSTRIE Société dite:
Siége Social
F-59154 Crespin Blanc-Misseron(FR)

(72) Inventeur: Girard, Jean-Michel c/o
A.N.F.Industrie
Tour Aurore Place des Reflets Cédex 5
F-92080 Paris Défense 6(FR)

(74) Mandataire: Loriot, Jacques et al
c/o SA. FEDIT-LORIOT 38, avenue Hoche
F-75008 Paris(FR)

(54) Dispositif d'intercirculation entre des engins couplés où circulent des voyageurs, notamment des véhicules ferroviaires ou routiers.

(57) L'invention concerne notamment le matériel ferroviaire et, plus particulièrement, l'équipement extérieur des voitures.

Le dispositif d'intercirculation (1) entre les deux extrémités ouvertes (2, 3) en regard l'une de l'autre de deux voitures ferroviaires couplées est constitué d'une succession d'anneaux de forme générale rectangulaire qui sont, alternativement, des anneaux rigides (7) et des anneaux souples (8) convenablement fixés les uns aux autres de manière à constituer une sorte de tunnel flexible dont les deux extrémités sont adaptées à être fixées, respectivement, aux deux extrémités des voitures.

L'invention est applicable aux voitures de chemins de fer pour permettre le passage des personnes d'une voiture à l'autre, ainsi qu'aux véhicules routiers articulés, et même à d'autres engins couplés où circulent des voyageurs, tels que des passerelles en usage dans les aéroports.

FIG.1

## DISPOSITIF D'INTERCIRCULATION ENTRE DES ENGINS COUPLES OU CIRCULENT DES VOYAGEURS, NOTAMMENT DES VEHICULES FERROVIAIRES OU ROUTIERS

L'invention concerne les dispositifs d'intercirculation entre des engins couplés où circulent des voyageurs, notamment des voitures ferroviaires ou des véhicules routiers tels que, par exemple, autobus ou trolleybus articulés, ou même des engins tels que des passerelles en usage dans les grands aéroports.

Dans ce qui suit, pour simplifier, on se référera presque uniquement à des voitures de chemin-de-fer mais il est entendu qu'on pourra, sans sortir du cadre de l'invention, remplacer le mot "voiture" par le mot "engin" interprété dans le sens qu'on vient de définir plus haut.

En général, dans le matériel ferroviaire, les dispositifs d'intercirculation connus comportent une sorte de passerelle avec une armature munie d'un soufflet ou d'une structure souple équivalente, le tout étant souvent complété par des pare-vent latéraux. Ces dispositifs sont relativement compliqués, non étanches et ne présentent souvent pas toute l'esthétique désirable.

Le but de l'invention est de réaliser un dispositif d'intercirculation qui ne présente pas les inconvénients des dispositifs habituels.

A cet effet, le dispositif suivant l'invention est constitué d'une succession d'anneaux de forme générale rectangulaire qui sont, alternativement, des anneaux rigides et des anneaux souples convenablement fixés les uns aux autres de manière à constituer une sorte de tunnel flexible dont les deux extrémités sont adaptées à être fixées, respectivement, aux deux extrémités en regard l'une de l'autre des deux voitures ferroviaires couplées.

Un tel dispositif est adaptable à tous les types de voitures ferroviaires et peut s'accommoder de tous les genres de débattements, qu'ils soient angulaires, latéraux, en gîte, ou en altitude; il ne nécessite pas la présence d'une passerelle puisqu'il constitue, en lui-même, l'élément porteur; il ne comporte pas de pièces mécaniques compliquées; il évite de prévoir des pare-vent latéraux pour masquer des pièces à déplacement dangereux; l'épaisseur de ses parois est très faible et, si l'on prend soin de donner aux anneaux des dimensions voisines de celles des extrémités des voitures, il assure une continuité de la section libre de circulation des voyageurs sur toute la longueur du train; la continuité de sa structure en fait un ensemble étanche à parois rigides; de plus, si suivant une autre caractéristique de l'invention, l'espace qui sépare deux anneaux rigides et qui renferme un anneau souple, est recouvert par des plaques solidaires des anneaux rigides, l'ensemble présente des parois pratiquement continues fonctionnelles et esthétiques et il se trouve protégé contre le vandalisme.

D'autres caractéristiques et avantages de l'invention ressortiront de la lecture de la description qui va suivre et de l'examen des dessins annexés qui montrent, à titre d'exemples, quelques modes de réalisation de dispositifs d'intercirculation suivant l'invention.

Sur ces dessins :

- la figure 1 représente en perspective, un ensemble de dispositifs d'intercirculation entre deux voitures ferroviaires suivant l'invention;

- la figure 2 est une coupe transversale du dispositif de la figure 1;

- la figure 3 est, à plus grande échelle, une coupe horizontale partielle faite suivant la ligne III-III de la figure 2;

- la figure 4 est une coupe partielle faite suivant la ligne IV-IV de la figure 3;

- la figure 5 est, à la même échelle, une coupe partielle faite suivant la ligne V-V de la figure 2;

- la figure 6 illustre en plan, le comportement du dispositif dans le cas d'une voie en courbe;

- la figure 7 est une vue analogue à celle de la figure 3 pour une variante d'exécution représentée dans des conditions de roulement des voitures sur une voie en ligne droite;

- la figure 8 illustre le comportement du dispositif de la figure 7, lorsque les voitures roulent sur une voie en courbe, du côté du petit rayon de la voie;

- la figure 8A illustre, dans les mêmes conditions, le comportement d'un anneau souple du côté du grand rayon de la voie;

- la figure 9 est une vue analogue à celle de la figure 7, mais avec une structure différente des anneaux rigides;

- la figure 10 est une vue en perspective illustrant la manière dont le dispositif peut être soutenu, en partie, par la barre d'attelage des deux voitures;

- la figure 11 est à plus grande échelle, une coupe verticale transversale montrant le détail du montage de la figure 10;

- la figure 12 est une vue analogue à celle de la figure 9, mais avec un anneau souple de profil différent.

- la figure 13 montre une autre variante de structure d'anneau souple, et

- la figure 14 est une coupe faite suivant la ligne XIV-XIV de la figure 13.

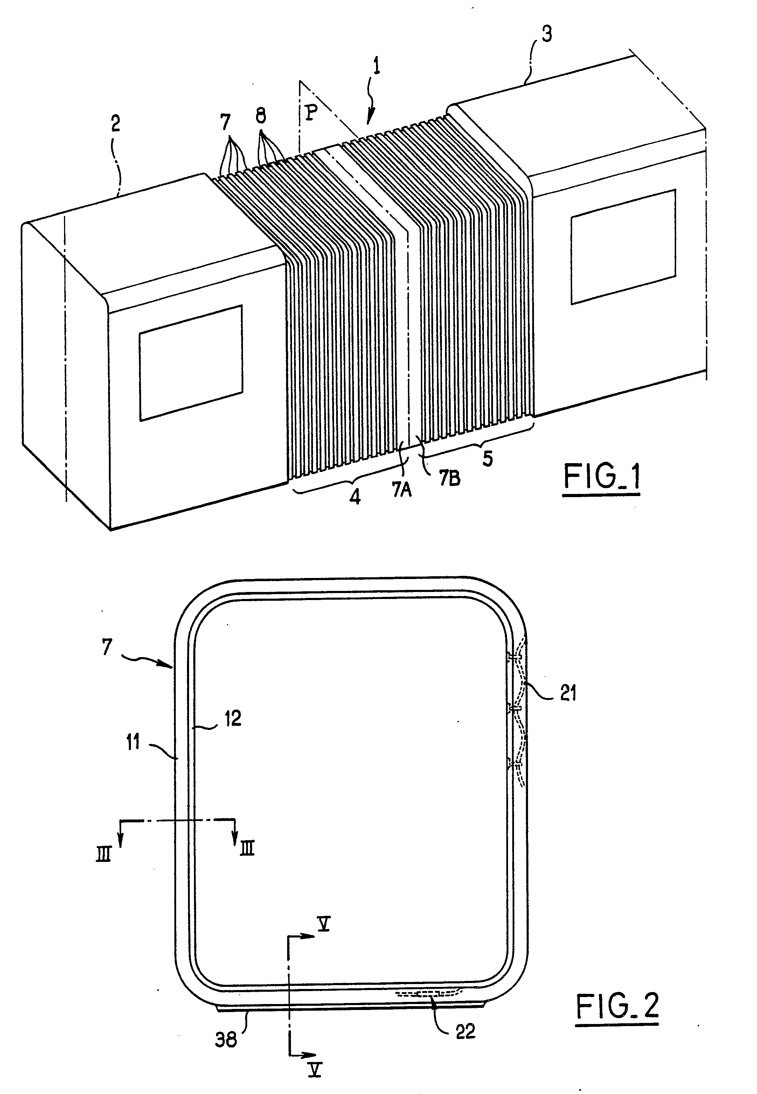

Le dispositif d'intercirculation désigné dans son ensemble par 1, sur la figure 1, est intercalé entre les deux extrémités ouvertes 2, 3 en regard l'une de l'autre de deux voitures ferroviaires couplées; il constitue une sorte de tunnel de section rectangulaire qui, dans le mode de réalisation représenté, est formé de deux moitiés 4, 5 fixées, d'une part, respectivement aux deux extrémités de voitures 2, 3, et, d'autre part, entre elles sur un plan de joint vertical transversal médian indiqué en P.

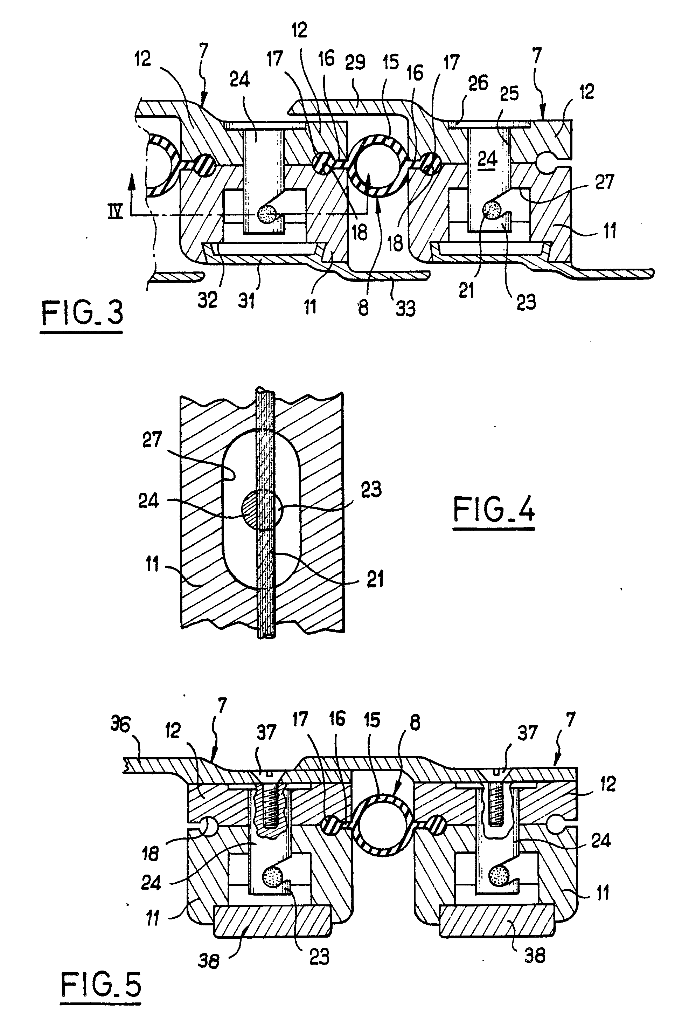

Chacune des deux moitiés du tunnel est constituée d'une succession d'anneaux de forme générale rectangulaire qui sont, alternativement, des anneaux rigides 7 (voir aussi figures 2 et 3) et des anneaux souples 8 convenablement fixés les uns aux autres par tout moyen approprié tel que, par exemple, vissage, clipsage ou collage. Les anneaux rigides sont par exemple en métal, de préférence un métal léger, tel que l'aluminium.

Pour des raisons de commodité de fabrication et de montage, il est préférable de concevoir les anneaux rigides en deux parties. Dans le mode de réalisation représenté sur la figure 3, les deux parties d'anneau 11, 12 sont conçues pour se monter l'une à l'intérieur de l'autre, et elles présentent la même épaisseur en direction axiale; ce sont des profilés extrudés qui sont ensuite cambrés au profil du tunnel.

L'anneau souple 8, dans cet exemple, est en élastomère de caractéristiques appropriées avec une partie principale intermédiaire 15, tubulaire en l'occurence, qui présente, de chaque côté, en direction axiale, une membrane 16 terminée par un renflement 17 en forme de boudin. Chaque boudin d'un anneau souple est emprisonné dans une gorge annulaire 18 à bords rapprochés de configuration conjuguée de celle formée par l'ensemble du boudin 17 et de la membrane 16 et pratiquée dans les faces frontales correspondantes des deux anneaux rigides adjacents, c'est-à-dire, dans le présent exemple, par moitiés dans le demi-anneau intérieur 11 et dans le demi-anneau extérieur 12, à cheval sur la surface de joint de ces deux parties d'anneaux.

Pour maintenir assemblées l'une à l'autre les deux parties d'un anneau rigide, il est prévu, dans le mode de réalisation représenté sur les figures 3 et 4, un système particulier qui comporte un câble 21 (voir aussi figure 2) muni d'un tendeur 22 et passant dans des crochets 23 dont les tiges 24 sont enfilées dans une série de trous 25 traversant radialement les deux parties d'anneaux 11, 12 à la fois; les crochets 23 présentent une tête 26 appuyée contre l'une des parties d'anneaux, ici la partie 12 qui sera, par exemple la partie intérieure, le câble prenant appui contre les bords d'évidements 27 pratiqués dans l'autre partie d'anneau en l'occurance la partie extérieure 11, autour des trous 25, sur la face de cette autre partie d'anneau qui tourne le dos à la première partie 12, le crochet se trouvant situé à l'intérieur de cet évidement. En tendant le câble 21 au moyen du tendeur 22 (figure 2), on applique fortement les deux parties de l'anneau l'une contre l'autre de sorte que l'anneau souple 15 se trouve convenablement maintenu entre deux anneaux rigides.

Le câble 21 et les crochets 23 sont protégés contre les intempéries et l'introduction de corps étrangers par un couvercle 31 clipsé dans une gorge 32 pratiquée dans la face externe de la partie d'anneau extérieure 11, ce qui, en même temps, améliore l'esthétique de l'ensemble. Ce couvercle présente un prolongement 33 qui constitue une garniture de recouvrement de l'espace compris entre deux anneaux rigides successifs et dans lequel est logé un anneau souple 8, assurant ainsi la protection de ce dernier, notamment contre le vandalisme. D'une manière analogue, chaque partie d'anneau intérieure 12, présente un prolongement 29 qui vient recouvrir partiellement l'anneau suivant et masque donc, en même temps l'intervalle où se trouve un anneau souple. On assure ainsi une continuité, notamment de la surface rigide sur laquelle les personnes sont appelées à marcher. D'une manière plus générale, on peut dire que tout l'ensemble du tunnel présente une surface intérieure aussi bien qu'une surface extérieure relativement lisses, ces surfaces constituant, en quelque sorte, des prolongements des parois des voitures elles-mêmes.

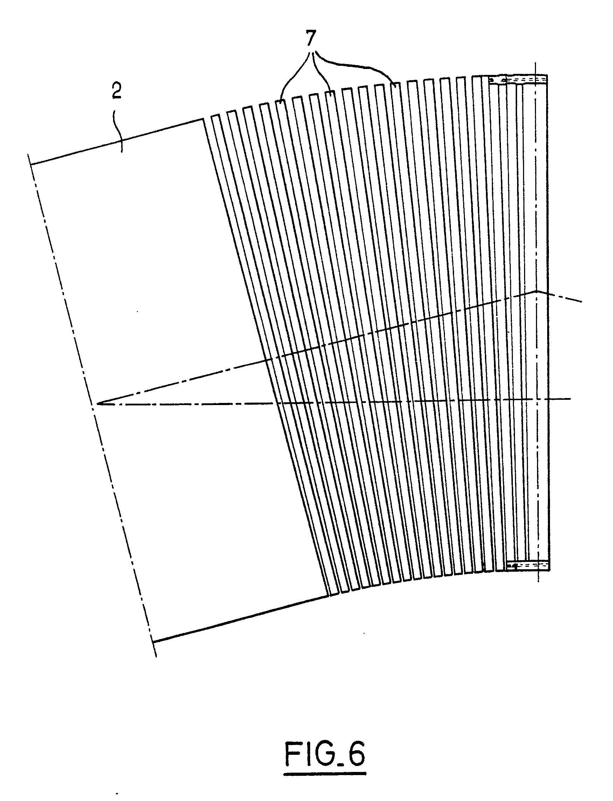

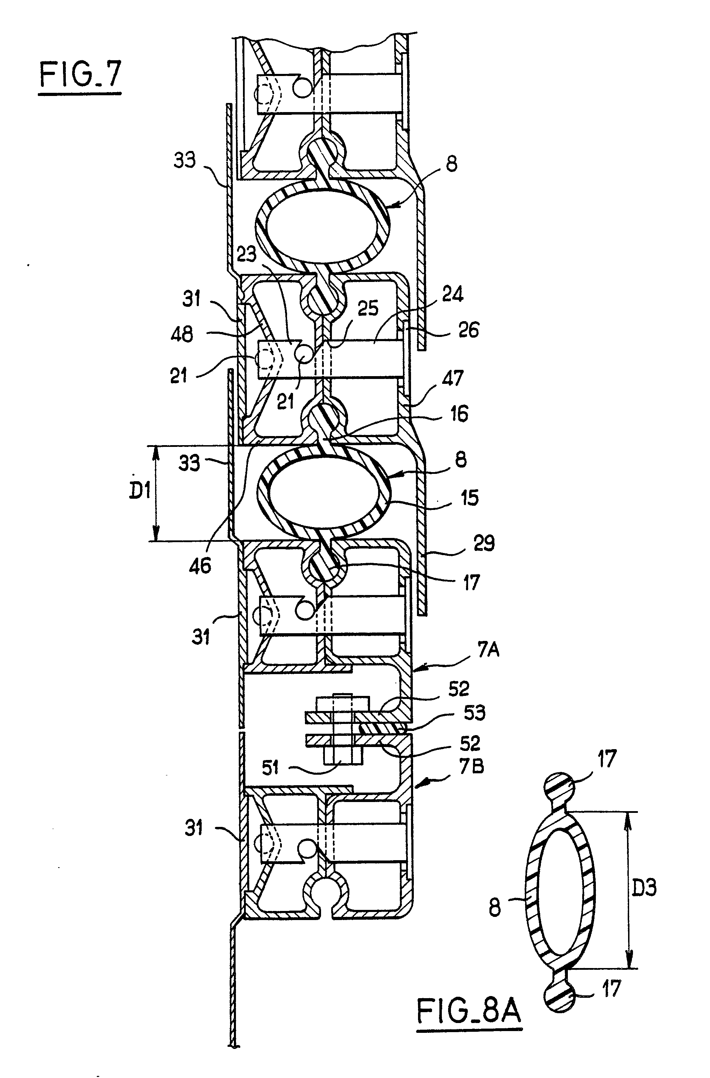

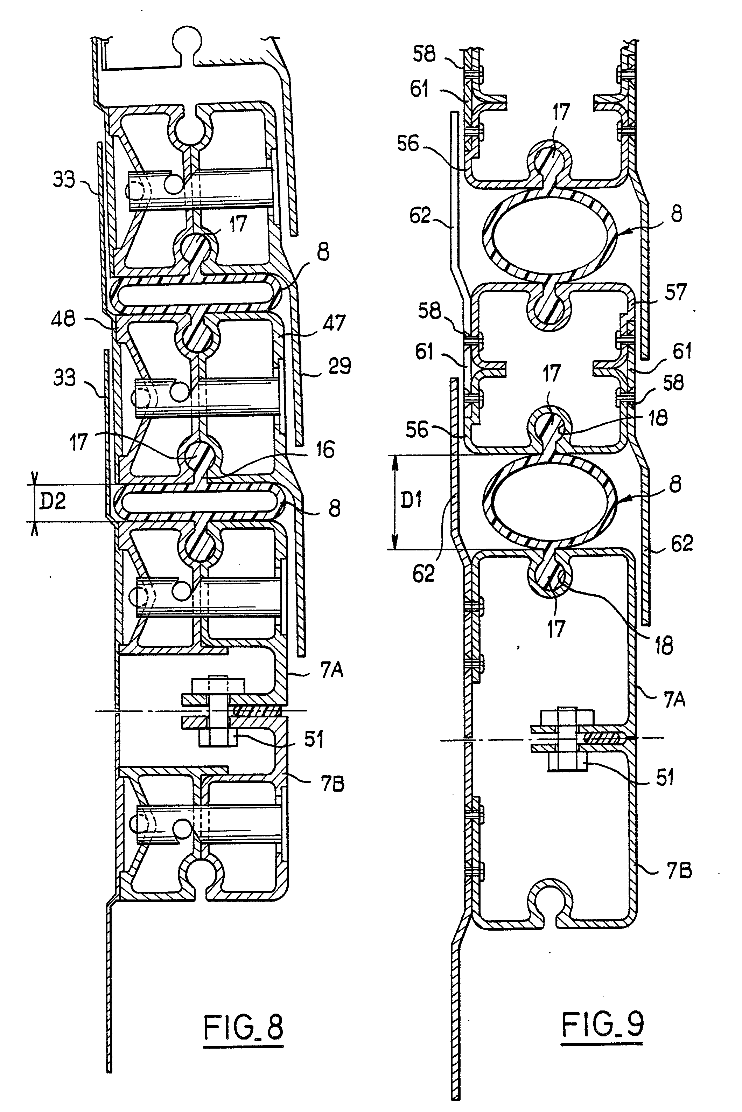

Lorsque les voitures reposent sur une voie rectiligne, le tunnel présente, dans son ensemble, une configuration relativement homogène, comme représenté sur la figure 1 et les anneaux souples 8 conservent leur section tubulaire cylindrique visible sur la figure 3. Sur une voie en courbe, les parties des anneaux rigides 7 qui se trouvent du côté du centre de la courbe, c'est-à-dire du côté du rail de plus petit rayon, se rapprochent les unes des autres, comme on peut le voir sur la figure 6, pendant que les parties correspondantes des anneaux souples 8 s'aplatissent comme représenté, par exemple, sur la figure 8 où les anneaux rigides présentent d'ailleurs une structure un peu différente sur laquelle on reviendra plus loin, lors de l'étude du mode de réalisation de la figure 7. Inversement, les parties des anneaux rigides 7 qui se trouvent du côté extérieur de la courbe s'éloignent les unes des autres pendant que les parties correspondantes des anneaux souples 8 s'allongent comme représenté sur la figure 8A.

Sur la figure 5 on a représenté une variante qui diffère du mode de réalisation de la figure 3 seulement par le fait que les garnitures de protection, au lieu de faire partie intégrante des anneaux, sont constituées par des bandes 36 fixées aux anneaux au moyen de vis 37 montées dans les tiges 24 des crochets de retenue des câbles d'assemblage 21.

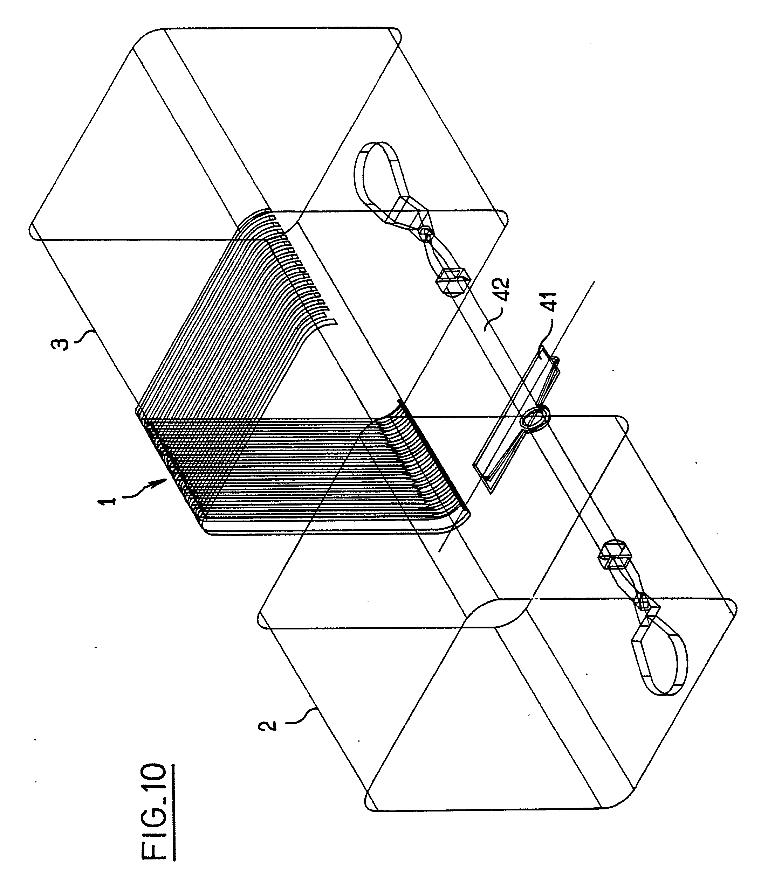

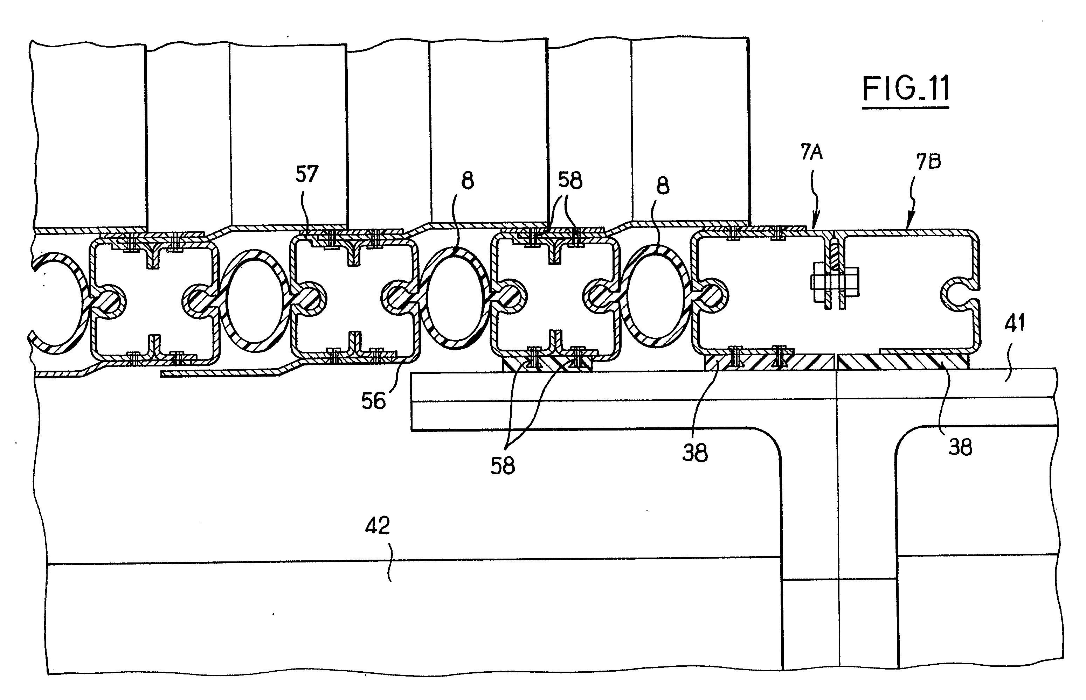

De plus, contre la face inférieure des anneaux rigides, on a assujetti des plaques 38 en un matériau résistant bien à l'abrasion et adaptées à reposer sur des lissoirs portés par les extrémités des voitures ou encore, comme représenté sur les figures 10 et 11, sur un lissoir 41 porté par la barre 42 d'attelage des deux voitures.

Sur la figure 7 on peut voir une variante du mode de réalisation de la figure 3, dans laquelle les deux parties d'anneaux 46, 47, encore montées l'une à l'intérieur de l'autre, sont constituées par des profilés creux extrudés; la paroi intérieure 48 de la partie extérieure 46 est en forme de gouttière de section en "V" dont la pointe se trouve à l'intérieur du profilé; le câble de tension 21 prend appui dans le fond de cette gouttière et les crochets 23 de traction du câble, dont les tiges sont encore guidées dans des trous radiaux 25 de la partie d'anneau intérieure 47, trouvent leur place dans de larges interruptions pratiquées dans la gouttière 48 en regard des trous radiaux 25. Le mode d'assemblage des parties d'anneaux entre elles et avec les anneaux souples 8, est le même que sur la figure 3. A titre de variante, on a donné, à la partie principale intermédiaire 15 des anneaux souples 8, une section de forme elliptique au lieu de circulaire. Les plaques de recouvrement des anneaux souples sont encore désignées par 29 et 33. L'assemblage, l'un à l'autre, des deux anneaux rigides 7A et 7B (voir aussi figure 1) qui se trouvent au milieu de la longueur du tunnel est assuré par des boulons 51 qui traversent des brides 52 rabattues vers l'intérieur des anneaux correspondants; un joint d'étanchéité 53 est interposé entre ces deux brides; l'accessibilité au boulons 51 est possible avant mise en place, ou après enlèvement, des couvercles 31.

La figure 8 illustre, par comparaison avec la figure 7, le comportement des anneaux souples 8 lors de flexions du tunnel, quand il se produit des déplacements relatifs des deux extrémités de voitures lors de débatte ments angulaires ou en gîte. Les anneaux souples s'aplatissent ou s'allongent plus ou moins en fonction de la valeur des déplacements des anneaux rigides. L'écartement des parties correspondantes des anneaux rigides passe, suivant le cas, de la valeur D1 (figure 7) à la valeur D2 (figure 8), ou bien à la valeur D3 (figure 8A).

Les choix des dimensions et des nombres d'anneaux rigides et souples dépendent de la longueur du tunnel, c'est-à-dire de la distance entre les deux voitures; le choix de la dureté des anneaux souples dépend, non seulement aussi de ces paramètres, mais également des limites d'efforts auxquels on peut soumettre les extrémités des voitures.

La fixation de chacun des anneaux rigides d'extrémités du tunnel à l'extrémité de voiture correspondante peut se faire, par exemple, de la même manière que représenté sur la figure 7 pour la fixation des deux anneaux centraux entre eux, au moyen de boulons tels que 51.

La figure 9 montre un autre mode de réalisation dans lequel les deux parties de chaque anneau rigide ne sont plus montées l'une à l'intérieur de l'autre, mais sont appliquées l'une contre l'autre, le long d'un plan vertical transversal; dans l'exemple représenté, ces deux parties 56, 57 sont identiques et sont constituées aussi par des profilés extrudés qui sont ensuite cambrés au profil du tunnel; les profilés ont une section en "U" et sont accolés par les extrémités de leurs ailes rabattues vers l'intérieur en formant des brides qui sont appuyées à plat les unes contre les autres. Ici, les deux parties d'anneaux 56, 57 sont assemblées entre elles au moyen de rivets 58 par l'intermédiaire de plaques 61 appliquées à cheval sur les joints des deux parties d'anneaux et munies de prolongements 62 qui, comme dans les modes de réalisation décrits plus haut, recouvrent les inter valles dans lesquels sont logés les anneaux souples 8. Les boudins 17 des anneaux souples sont retenus, dans les deux anneaux rigides adjacents, par pincement, c'est-à-dire par resserrement des deux lèvres de la gorge 18 dont le profil initial est ouvert lors de la fabrication par extrusion, et ensuite pincé, au moment du montage des anneaux souples afin que les boudins 17 soient bloqués dans le fond des gorges 18.

Ce mode de réalisation facilite l'entretien du tunnel car il permet un remplacement aisé d'un anneau souple par le remplacement systématique des deux parties d'anneaux rigides adjacentes qui le supportent.

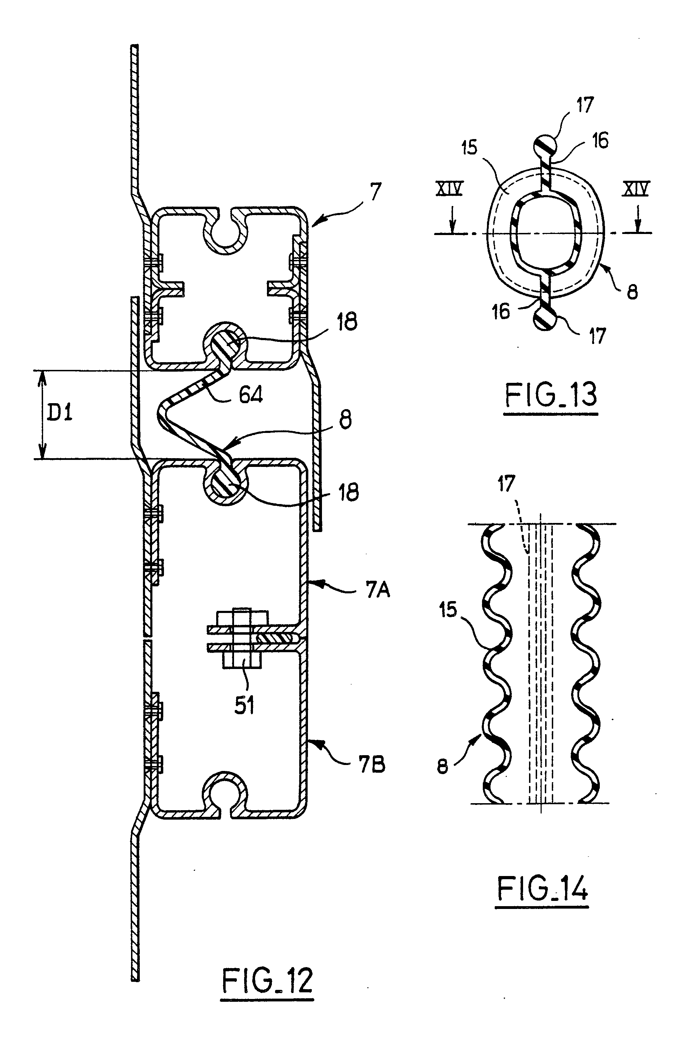

Dans tous les modes de réalisation décrits plus haut, chaque anneau souple comporte un partie centrale principale en forme de tuyau de section circulaire ou elliptique qui présente deux membranes latérales terminées par des renflements en forme de boudins pour leur fixation dans des gorges conjuguées des deux anneaux rigides adjacents. Mais la structure des anneaux souples pourrait être différente. C'est ainsi que, sur la figure 12, on a représenté une section 64 en forme de "V", c'est-à-dire qu'une fois en place, chaque anneau souple présente la configuration de deux troncs de pyramides quadrangulaires accolés par leurs grandes bases. La section pourrait aussi être en forme de "W", ou même présenter une forme ondulée rappelant, par exemple, une sinusoïde. Enfin, la configuration des anneaux souples pourrait être totalement différente de celles envisagées plus haut et l'on pourrait concevoir tout autre moyen approprié pour rendre un anneau souple solidaire des deux anneaux rigides qui lui sont adjacents, tels que, par exemple : vissage, clipsage, ou encore collage.

En outre, on a vu plus haut comment les anneaux souples sont capables de s'accommoder de débattements angulaires ou en gîte; lorsqu'il s'agit de différences d'altitude entre les deux extrémités de voitures, ces différences sont relativement faibles (de l'ordre de 100 à 140 mm) de sorte qu'elles peuvent également être absorbées sans dommage par les anneaux souples. Par contre, lorsque les voitures passent sur une voie en courbe suivie immédiatement d'une contre-courbe, il peut se produire des déplacements latéraux relatifs des deux extrémités de voiture d'une amplitude de grande valeur pouvant atteindre, par exemple 400 à 500 mm; dans de tels cas, si les parties verticales des anneaux souples peuvent supporter le mouvement de roulement qui leur est imposé, il n'en est pas de même des parties horizontales desdits anneaux dont les deux bourrelets, dans les modes de réalisation décrits plus haut, seraient appelés à subir un déplacement latéral relatif excessif. En vue de remédier à cet inconvénient, on peut, ainsi qu'on l'a représenté sur les figures 13 et 14, donner aux anneaux souples, au moins dans leurs portions horizontales, une structure annelée, c'est-à-dire que la partie principale intermédiaire 15 des anneaux ne se présente plus, à l'état libre, sous la forme d'un simple tuyau cylindrique à génératrice rectiligne, mais à génératrice ondulée comme on peut le voir sur la figure 14. L'anneau présente encore, de chaque côté, la membrane 16 terminée par les renflement 17 en forme de boudin. Des déplacements parallèles et opposés des renflements de grande amplitude, comme on peut en rencontrer dans des passages en courbe et contre-courbe, deviennent ainsi possibles sans que le matériau élastomère qui constitue les anneaux soit soumis à des contraintes excessives, étant donné qu'il n'y a plus allongement du matériau, mais déformation de sa configuration globale précisément conçue à cet effet.

Bien entendu, l'invention n'est nullement limitée aux exemples décrits et représentés, on peut y apporter de nombreuses modifications accessibles à l'homme de l'art, suivant les applications envisagées, sans s'écarter pour cela du cadre de l'invention.

## Revendications

1. Dispositif d'intercirculation entre les deux extrémités ouvertes en regard l'une de l'autre de deux engins couplés où circulent des voyageurs, notamment des voitures ferroviaires ou des véhicules routiers tels qu'autobus ou trolleybus articulés, ou encore des engins tels que les passerelles en usage dans les grands aéroports, caractérisé : en ce qu'il est constitué d'une succession d'anneaux de forme générale rectangulaire qui sont, alternativement, des anneaux rigides (7) et des anneaux souples (8) convenablement fixés les uns aux autres de manière à constituer une sorte de tunnel flexible (1) dont les deux extrémités sont adaptées à être fixées, respectivement, aux deux extrémités précitées (2, 3) desdits engins ; et en ce que chaque anneau rigide (7) est constitué de deux parties d'anneaux rigides (11, 12 ou 46, 47 ou 56, 57) assemblées l'une à l'autre.

2. Dispositif suivant la revendication 1, caractérisé en ce que les anneaux (7, 8) ont des dimensions voisines de celles des extrémités (2, 3) des engins considérés.

3. Dispositif suivant la revendication 2, caractérisé en ce que les anneaux rigides (7) ont une section polygonale évidée, de préférence rectangulaire.

4. Dispositif suivant la revendication 1, caractérisé en ce que les deux parties d'anneaux (56, 57) qui constituent un anneau rigide (7) sont plaquées l'une contre l'autre suivant un plan géométrique perpendiculaire à l'axe de l'anneau.

5. Dispositif suivant la revendication 1, caractérisé en ce que les deux parties d'anneaux (56, 57) qui constituent un anneau rigide sont identiques.

6. Dispositif suivant la revendication 4, caractérisé en ce que les deux parties d'anneaux (56, 57) qui constituent un anneau rigide (7) sont de section en "U" et sont accolées par les extrémités de leurs ailes de préférence rabattues vers l'intérieur à plat les unes contre les autres.

7. Dispositif suivant la revendication 1, caractérisé en ce que les deux parties d'anneaux (11, 12 ou 46, 47) qui constituent un anneau rigide (7) sont assemblées l'une à l'intérieur de l'autre.

8. Dispositif suivant la revendication 1, caractérisé en ce que les anneaux souples (8) sont en élastomère et comportent, chacun, une partie intermédiaire souple (15) présentant, de chaque côté, en direction axiale, une membrane (16) terminée par un renflement en forme de boudin (17) emprisonné dans une gorge annulaire (18) à bords rapprochés de configuration conjuguée de celle formée par l'ensemble du boudin et de la membrane, et pratiquée dans les faces frontales correspondantes des deux anneaux rigides (7) adjacents.

9. Dispositif suivant la revendication 7 et 8, caractérisé en ce que les gorges annulaires (18) dans lesquelles sont emprisonnés les boudins (17) des anneaux souples (8) sont pratiquées, par moitiés, dans la partie d'anneau intérieure (12 ou 47) et dans la partie d'anneau extérieure (11 ou 46) de part et d'autre de leur surface de joint.

10. Dispositif suivant la revendication 8, caractérisé en ce que la partie intermédiaire (15) des anneaux souples (8) est tubulaire et ne remplit pas complètement l'espace compris entre deux anneaux rigides (7) successifs lorsque l'ensemble du tunnel (1) présente une configuration générale rectiligne.

11. Dispositif suivant la revendication 8, caractérisé en ce que la partie intermédiaire (64) des anneaux souples (8) est constituée d'une succession d'au moins deux troncs de pyramides reliés par leurs bases de même grandeur.

12. Dispositif suivant la revendication 1, caractérisé en ce que l'espace qui sépare deux anneaux rigides (7) et qui renferme un anneau souple (8) est largement recouvert par une plaque (29, 33, 62) solidaire d'un anneau rigide (7).

13. Dispositif suivant la revendication 12, caractérisé en ce que la plaque de recouvrement (29, 33) est constituée par un prolongement axial d'un anneau rigide (7).

14. Dispositif suivant la revendication 12, caractérisé en ce que la plaque de recouvrement (62) est constituée par une pièce rapportée fixée à l'anneau rigide (7).

15. Dispositif suivant la revendications 12, caractérisé en ce que la plaque de recouvrement (29, 33, 62) est aussi de configuration annulaire et s'étend le long de tous les bords de l'espace qui sépare deux anneaux rigides (7) successifs.

16. Dispositif suivant les revendication 4 et 14, caractérisé en ce que la plaque de recouvrement rapportée (61, 62) constitue une pièce de fixation de deux parties d'anneaux rigides (56, 57) l'une contre l'autre.

17. Dispositif suivant la revendication 1, caractérisé en ce que la partie inférieure du tunnel (1) est munie, au milieu de sa longueur, d'une semelle (38) en un matériau résistant bien à l'abrasion et adapté à reposer librement sur un lissoir (41) porté par la barre (42) d'attelage de deux voitures ferroviaires constituant les engins considérés.

18. Dispositif suivant la revendication 1, caractérisé en ce que la partie inférieure du tunnel (1) est munie de semelles (38) en un matériau résistant bien à l'abrasion et adaptées à reposer librement sur des lissoirs portés par les engins considérés.

19. Dispositif suivant la revendication 7, caractérisé en ce que les moyens d'assemblage des deux parties d'anneaux rigides (11, 12 ou 46, 47) l'une dans l'autre sont constitués par un câble (21) muni d'un tendeur (22) et passant dans des crochets (23) dont les tiges (24) sont enfilées dans une série de trous (25) traversant radialement les deux parties d'anneaux à la fois, lesdits crochets présentant une tête (26) appuyée contre une première (12 ou 47) desdites parties d'anneaux, tandis que le câble prend appui contre les bords d'évidements (27) pratiqués dans l'autre partie d'anneau (11 ou 46), autour desdits trous, sur la face de cette autre partie d'anneau qui tourne le dos à la première, le crochet se trouvant situé à l'intérieur de cet évidement.

20. Dispositif suivant la revendication 19, caractérisé en ce que lesdits évidements contre les bords desquels prend appui le câble (21) sont constitués par des interruptions d'une paroi intérieure (48) de l'anneau en forme de gouttière de section en "V".

21. Dispositif suivant la revendication 19, caractérisé en ce que les évidements précités (27) sont masqués par une plaque de fermeture (31) qui, de préférence, présente un prolongement axial (33) servant de plaque de recouvrement de l'espace compris entre deux anneaux rigides (7).

22. Dispositif suivant la revendication 1, caractérisé en ce que le tunnel (1) est composé de deux demi-tunnels (4, 5) fixés, l'un au bout de l'autre, par deux anneaux rigides (7) adjacents, et fixés respectivement aux deux engins considérés par deux autres anneaux rigides (7).

FIG_1

FIG_2

EP 0 317 679 A1

FIG. 3

FIG. 4

FIG. 5

FIG_6

EP 0 317 679 A1

## FIG.7

## FIG.8A

FIG_8

FIG_9

FIG.10

EP 0 317 679 A1

FIG.11

57    8    58    8    7A    7B

56    58    38    38

42    41

FIG_12

FIG_13

FIG_14

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 817 739  (WALTER VETTER GmbH & CO.) <br> * Figures 1,2; page 6; revendication 2 * <br> --- | 1,2,8, 10,22 | B 61 D  17/22 <br> B 62 D  47/02 <br> B 60 D   5/00 |
| A | DE-A-3 401 298  (HÜBNER GUMMI- UND KUNSTSTOFF GmbH) <br> * Figures 1,2,3-4a; page 6, ligne 2 - page 7, paragraphe 1 * <br> ----- | 1 | |

**DOMAINES TECHNIQUES RECHERCHES (Int. Cl.4)**

B 61 D
B 62 D
B 60 D
B 64 F

Le présent rapport a été établi pour toutes les revendications

| Lieu de la recherche | Date d'achèvement de la recherche | Examinateur |
|---|---|---|
| LA HAYE | 22-07-1988 | CHLOSTA P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)